(19) Europäisches Patentamt
European Patent Office
Office européen des brevets

(11) **EP 3 232 134 B1**

(12) **EUROPEAN PATENT SPECIFICATION**

(45) Date of publication and mention
of the grant of the patent:
**27.05.2020 Bulletin 2020/22**

(51) Int Cl.:
**G05D 23/19** (2006.01)     **F24H 9/20** (2006.01)
**F24H 4/02** (2006.01)

(21) Application number: **15868422.5**

(22) Date of filing: **04.08.2015**

(86) International application number:
**PCT/CN2015/086023**

(87) International publication number:
**WO 2016/090931 (16.06.2016 Gazette 2016/24)**

(54) **SYSTEM FOR CONTROLLING A WATER HEATER COMPRISING A HEAT PUMP AND ASSOCIATED METHOD**

WÄRMEPUMPEHEISSWASSERSTEUERUNGSSYSTEM UND -VERFAHREN

PROCÉDÉ ET SYSTÈME DE COMMANDE D'UN CHAUFFE-EAU UTILISANT UNE POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2014 CN 201410773884**

(43) Date of publication of application:
**18.10.2017 Bulletin 2017/42**

(73) Proprietors:
• **GD Midea Heating & Ventilating Equipment Co., Ltd.**
  **Foshan Guangdong 528311 (CN)**
• **Midea Group Co., Ltd.**
  **Foshan, Guangdong 528311 (CN)**

(72) Inventors:
• **CHEN, Youwen**
  **Foshan**
  **Guangdong 528311 (CN)**
• **RAO, Rongshui**
  **Foshan**
  **Guangdong 528311 (CN)**

(74) Representative: **Grünecker Patent- und Rechtsanwälte**
**PartG mbB**
**Leopoldstraße 4**
**80802 München (DE)**

(56) References cited:
EP-A1- 2 559 953        CN-A- 101 149 188
CN-A- 101 900 419       CN-A- 102 506 504
CN-A- 103 574 906       CN-A- 104 566 996
CN-Y- 200 965 352       TW-A- 201 339 516
US-A1- 2010 209 084     US-A1- 2013 327 843

**Description**

**FIELD**

The present disclosure relates to the technology field of household appliances, and more particularly, to a method and a system for controlling a heat pump water heater and a heat pump water heater.

**BACKGROUND**

At present, a heat pump water heater is generally turned on as follows. By setting a turn-on temperature difference, a heat pump is turned on when an actual water temperature is lower than a difference between a set temperature and the turn-on temperature difference, and otherwise the heat pump is remained in the current state. Currently, the turn-on temperature difference is fixed. A turn-on condition is simple by adopting the fixed turn-on temperature difference, so that the turn-on time may be determined visually according to the temperature. However, when the ambient temperature is high, heating capacity is great. In such a case, if the turn-on temperature difference is small, a main engine is turned on and off frequently and an operation load is too high, thereby affecting reliability of the heat pump system and wasting large amounts of energy. When the ambient temperature is low, the heating capacity is small. In such a case, adopting the fixed turn-on temperature difference may cause a delayed turn-on, and requirements of using hot water may not be satisfied, thereby causing poor comfort. When the set temperature is high, the fixed turn-on temperature difference may lead to that the heat pump system is always running under high load conditions, thereby seriously affecting the reliability of the heat pump system.

US 2010/0209084 A1 discloses a heat pump water heater and systems and methods for its control. The systems are configured to heat water within a water storage tank of a heat pump water heater wherein a controller within the system is operatively connected to a plurality of heat sources including at least one electric heating element and a heat pump and sensors in order to selectively energize one of the plurality of heat sources. The controller is configured to process data representative of the temperature of water within the tank near the top of the water storage tank, and rate of water flowing out of the water storage tank, in order to automatically selectively energize the heat sources. The selection of heat sources by the controller is determined by a mode of operation selected by the user and the data processed by the controller in view of the selected mode of operation.

In EP 2559953A1, an operating method in a heat pump hot water supply system of an indirect heating method is provided by which an average COP during a water heating period can be improved and a risk of running out of hot water can be prevented from increasing.

CN 200965352Y discloses an auxiliary heating device of a heat pump hot water system, including a controller, an auxiliary heater, a sensor for measuring an average temperature of a water tank, a sensor for measuring an ambient temperature, a sensor for measuring a condensing temperature of a heat pump system. The controller receives the temperature signals from the three sensors, and sends a control signal according to the system instantaneous COP to determine a switch between the heating by the heat pump and the heating by the auxiliary heater.

**SUMMARY**

The present disclosure aims to solve at least one of the problems existing in the related art to some extent. To this end, an objective of a first aspect of the present disclosure is to provide a method for controlling a heat pump water heater, which can control a turn-on of the heat pump water heater intelligently.

An objective of a second aspect of the present disclosure is to provide a system for controlling a heat pump water heater.

In order to realize the above objectives, a method for controlling a heat pump water heater according to embodiments of the first aspect of the present disclosure includes: receiving a turn-on instruction; detecting an ambient temperature and a current water temperature in a water tank of the heat pump water heater; acquiring a turn-on temperature difference according to the ambient temperature and a set temperature of the heat pump water heater, and acquiring a turn-on threshold according to the turn-on temperature difference; and determining whether the current water temperature is less than the turn-on threshold, keeping a current state if the current water temperature is greater than or equal to the turn-on threshold, and controlling the heat pump system to turn on so as to heat the water in the water tank if the current water temperature is less than the turn-on threshold.

With the method for controlling a heat pump water heater according to embodiments of the present disclosure, the turn-on temperature difference is acquired according to the ambient temperature and the set temperature, and the turn-on threshold is determined intelligently according to the turn-on temperature difference, thereby improving comfort of the user when using the water, improving the user experience and ensuring the reliability of the heat pump system.

In an embodiment of the present disclosure, the turn-on temperature difference is acquired according to a corrected temperature corresponding to the ambient temperature and a corrected temperature corresponding to the set temperature.

In an embodiment of the present disclosure, the turn-on temperature difference is acquired according to a corrected temperature corresponding to the ambient temperature and a corrected temperature corresponding to the set temperature, in which the higher the ambient temperature is, the greater the corrected temperature corresponding to the ambient temperature is; and the higher the set temperature is, the greater the corrected temperature corresponding to the set temperature is.

In an embodiment of the present disclosure, the turn-on threshold is a difference between the set temperature and the turn-on temperature difference.

In an embodiment of the present disclosure, the turn-on threshold is a difference between a turn-off temperature and the turn-on temperature difference, and the turn-off temperature is a limit temperature reached by the water heated by the heat pump system.

In an embodiment of the present disclosure, the turn-on threshold is a minimum of a difference between the set temperature and the turn-on temperature difference and a difference between a turn-off temperature and the turn-on temperature difference, and the turn-off temperature is a limit temperature reached by the water heated by the heat pump system.

A system for controlling a heat pump water heater according to embodiments of the second aspect of the present disclosure includes a heat pump system and a controller. The controller includes a receiving module, a temperature sensing module and a processor. The receiving module is configured to receive a turn-on instruction. The temperature sensing module is configured to detect an ambient temperature and a current water temperature in a water tank of the heat pump water heater. The processor is configured to acquire a turn-on temperature difference according to the ambient temperature and a set temperature of the heat pump water heater, and to acquire a turn-on threshold according to the turn-on temperature difference; the processor is further configured to determine whether the current water temperature is less than the turn-on threshold, to keep a current state if the current water temperature is greater than or equal to the turn-on threshold, and to control the heat pump system to turn on and to heat the water in the water tank if the current water temperature is less than the turn-on threshold.

With the system for controlling a heat pump water heater according to embodiments of the present disclosure, the processor acquires the turn-on temperature difference according to the ambient temperature and set temperature acquired by the temperature sensing module, and determines the turn-on threshold according to the turn-on temperature difference intelligently, thereby improving comfort of the user when using the water, improving the user experience and ensuring the reliability of the heat pump system.

In an embodiment of the present disclosure, the processor is further configured to acquire the turn-on temperature difference according to a corrected temperature corresponding to the ambient temperature and a corrected temperature corresponding to the set temperature.

In an embodiment of the present disclosure, the processor is further configured to acquire the turn-on temperature difference according to a corrected temperature corresponding to the ambient temperature and a corrected temperature corresponding to the set temperature, in which the higher the ambient temperature is, the greater the corrected temperature corresponding to the ambient temperature is; and the higher the set temperature is, the greater the corrected temperature corresponding to the set temperature is.

In an embodiment of the present disclosure, the turn-on threshold is a difference between the set temperature and the turn-on temperature difference.

In an embodiment of the present disclosure, the turn-on threshold is a difference between a turn-off temperature and the turn-on temperature difference, and the turn-off temperature is a limit temperature reached by the water heated by the heat pump system.

In an embodiment of the present disclosure, the turn-on threshold is a minimum of a difference between the set temperature and the turn-on temperature difference and a difference between a turn-off temperature and the turn-on temperature difference, and the turn-off temperature is a limit temperature reached by the water heated by the heat pump system.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

Fig. 1 is a flow chart showing a method for controlling a heat pump water heater according to an embodiment of the present disclosure;

EP 3 232 134 B1

Fig. 2 is a schematic diagram illustrating a relationship between an ambient temperature and a corrected temperature thereof according to an embodiment of the present disclosure;

Fig. 3 is a schematic diagram illustrating a relationship between a set temperature and a corrected temperature thereof according to an embodiment of the present disclosure; and

Fig. 4 is a block diagram illustrating a system for controlling a heat pump water heater according to an embodiment of the present disclosure.

## DETAILED DESCRIPTION

In the description of the present disclosure, it should be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In addition, terms "first" and "second" are merely used for explanation, and should not understood to indicate or imply relative importance or implicitly specify the number of features indicated. Therefore, a feature defined with "first" or "second" may explicitly or implicitly include at least one of the feature. In the specification, "a plurality of" refers to at least two, for example, two or three, unless otherwise defined explicitly.

In the description of the present disclosure, unless specified or limited otherwise, the terms "mounted," "connected," "coupled," and "fixed" and variations thereof are used broadly and encompass such as fixed or detachable mountings, connections and couplings, and can be mechanical or electrical mountings, connections and couplings, and also can be direct and via media indirect mountings, connections, and couplings, and further can be inner mountings, connections and couplings of two components or interaction relations between two components, unless otherwise specified, which can be understood by those skilled in the art according to the detail embodiment of the present disclosure.

In the description of the present disclosure, unless specified or limited otherwise, the first characteristic is "on" or "under" the second characteristic refers to the first characteristic and the second characteristic can be direct or via media indirect mountings, connections, and couplings. And, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right over the second characteristic or is diagonal under the second characteristic, or just refer to the horizontal height of the first characteristic is lower than the horizontal height of the second characteristic.

Reference will be made in detail to embodiments of the present disclosure. The exemplary embodiments are shown in the accompanying drawings, in which the same or similar elements and the elements having same or similar functions are denoted by like reference numerals throughout the descriptions. The embodiments described herein with reference to accompanying drawings are explanatory, illustrative, and used to generally understand the present disclosure. The embodiments shall not be construed to limit the present disclosure.

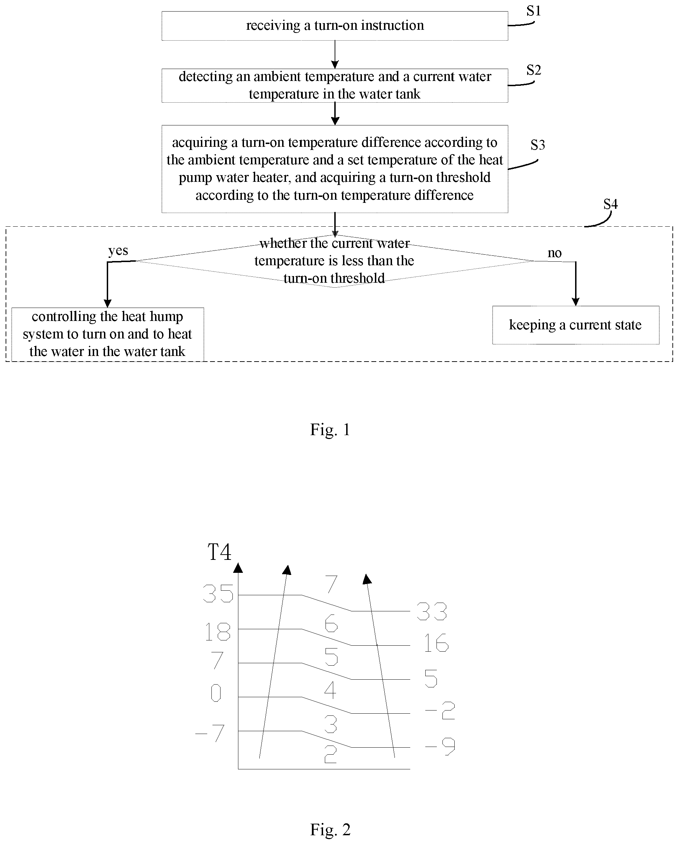

Referring to Fig. 1, a method for controlling a heat pump water heater according to an embodiment of the first aspect of the present disclosure is configured to control a heat pump system of the heat pump water heater to turn on for heating water in a water tank, and includes: receiving a turn-on instruction; detecting an ambient temperature and a current water temperature in the water tank; acquiring a turn-on temperature difference according to the ambient temperature and a set temperature of the heat pump water heater, and acquiring a turn-on threshold according to the turn-on temperature difference; and determining whether the current water temperature is less than the turn-on threshold, keeping a current state if the current water temperature is greater than or equal to the turn-on threshold, and controlling the heat pump system to turn on and to heat the water in the water tank if the current water temperature is less than the turn-on threshold. The specific implementation procedures may be as follows.

Block S1, a turn-on instruction is received.

Block S2, an ambient temperature and a current water temperature in the water tank are detected.

In an embodiment of the present disclosure, the ambient temperature and the current water temperature in the water tank of the heat pump water heater are detected by a temperature sensing module.

Block S3, a turn-on temperature difference is acquired according to the ambient temperature and a set temperature of the heat pump water heater, and a turn-on threshold is acquired according to the turn-on temperature difference.

Block S4, it is determined whether the current water temperature is less than the turn-on threshold, a current state is kept if the current water temperature is greater than or equal to the turn-on threshold, and the heat pump system is controlled to turn on and to heat the water in the water tank if the current water temperature is less than the turn-on

4

threshold.

In an embodiment of the present disclosure, the turn-on temperature difference $\Delta T$ is acquired according to the ambient temperature $T_4$ and the set temperature $T_s$ of the heat pump water heater. The turn-on temperature difference $\Delta T$ is determined by a formula of $\Delta T = f(T_4, T_s) = e^{\lg(T_4+15)} + 10\ln(T_s/45)$.

For example, $\Delta T$ is computed according to $T_4$ and $T_s$ as follows.

A corrected temperature corresponding to the ambient temperature $T_4$ is computed according to a formula of $e^{\lg(T_4+15)}$, which may be shown as following table.

| $T_4$ (°C) | -10 | -6 | -2 | 2 | 6 | 10 | 14 | 18 | 22 | 26 | 30 | 34 | 38 | 42 | 46 | 50 |
|---|---|---|---|---|---|---|---|---|---|---|---|---|---|---|---|---|
| $e^{\lg(T_4+15)}$ (°C) | 2 | 3 | 3 | 3 | 4 | 4 | 4 | 5 | 5 | 5 | 5 | 5 | 6 | 6 | 6 | 6 |

A corrected temperature corresponding to the set temperature $T_s$ is computed according to a formula of $10\ln(T_s/45)$, which may be shown as following table.

| $T_s$ (°C) | 40 | 42 | 44 | 46 | 48 | 50 | 52 | 54 | 56 | 58 | 60 | 62 | 64 | 66 | 68 | 70 |
|---|---|---|---|---|---|---|---|---|---|---|---|---|---|---|---|---|
| $10\ln(T_s/45)$ (°C) | -1 | -1 | 0 | 0 | 1 | 1 | 1 | 2 | 2 | 3 | 3 | 3 | 4 | 4 | 4 | 4 |

Examples are taken to illustrate the computing procedure of $\Delta T$.

Example One: when the ambient temperature $T_4$ is 14°C, and the set temperature $T_s$ is 42°C, the corresponding turn-on temperature difference $\Delta T$ may be as follows.

According to the above tables, the value corresponding to $T_4$ is 4 when the ambient temperature $T_4$ is 14°C, and the value corresponding to $T_s$ is -1 when the set temperature $T_s$ is 42°C. Then, a value of $\Delta T$ may be as $\Delta T = 4 + (-1) = 4 - 1 = 3$. That is, the turn-on temperature difference $\Delta T = 3$ °C when the ambient temperature $T_4$ is 14°C and the set temperature $T_s$ is 42°C.

In an embodiment of the present disclosure, the turn-on threshold $T$ is a difference of the set temperature $T_s$ and the turn-on temperature difference $\Delta T$. That is, $T = T_s - \Delta T = 39$ °C. When it is detected that in the water tank, the current water temperature $T_1 < 39$C, the heat pump system is controlled to be turned on to perform heating. In addition, the fixed temperature difference currently adopted is 5°C or 6°C, so that the turn-on may be realized in advance when $\Delta T = 3$°C, thereby ensuring the timeliness and comfort of using water by the user.

Example Two: when the ambient temperature $T_4$ is 14°C, and the set temperature $T_s$ is 60°C, the corresponding turn-on temperature difference $\Delta T$ may be as follows.

According to the above tables, the value corresponding to $T_4$ is 4°C when the ambient temperature $T_4$ is 14°C, and the value corresponding to $T_s$ is 3°C when the set temperature $T_s$ is 60°C. Then, a value of $\Delta T$ may be as $\Delta T = 4 + 3 = 7$°C. That is, the turn-on temperature difference $\Delta T = 7$°C when the ambient temperature $T_4$ is 14°C and the set temperature $T_s$ is 60°C.

In an embodiment of the present disclosure, the turn-on threshold $T$ is the difference of the set temperature $T_s$ and the turn-on temperature difference $\Delta T$. That is, $T = T_s - \Delta T = 53$ °C. When it is detected that in the water tank, the current water temperature $T_1 < 53$°C, the heat pump system is controlled to be turned on to heat the water in the water tank. In addition, the fixed temperature difference currently adopted is 5°C or 6°C, so that the delayed turn-on may be realized when $\Delta T = 7$°C, thereby reducing the heat pump system operating under high load and ensuring the reliability.

In another embodiment of the present disclosure, the turn-on temperature difference $\Delta T$ is acquired according to a corrected temperature $\Delta T_4$ corresponding to the ambient temperature $T_4$ and a corrected temperature $\Delta T_s$ corresponding to the set temperature $T_s$. The turn-on temperature difference $\Delta T$ is determined by a formula of $\Delta T = f(\Delta T_4, \Delta T_s) = \Delta T_4 + \Delta T_s$.

Generally, the higher the ambient temperature $T_4$ is, the more energy absorbed from the outside by refrigerant is. In order to avoid turning on or off the heat bump system frequently, the corrected temperature $\Delta T_4$ may be set according to the ambient temperature $T_4$. In addition, since the user's body temperature is generally around 37°C, the corrected temperature $\Delta T_s$ may be set according to the set temperature $T_s$, so as to ensure the comfort of the user when using the water. For example, when the set temperature $T_s$ is greater than 40°C, the water temperature in the heat bump water heater is kept close to the level of the user's body temperature by setting the corrected temperature $\Delta T_s$. $\Delta T_4$ and $\Delta T_s$ are set according to specific conditions, such as a volume of the water tank.

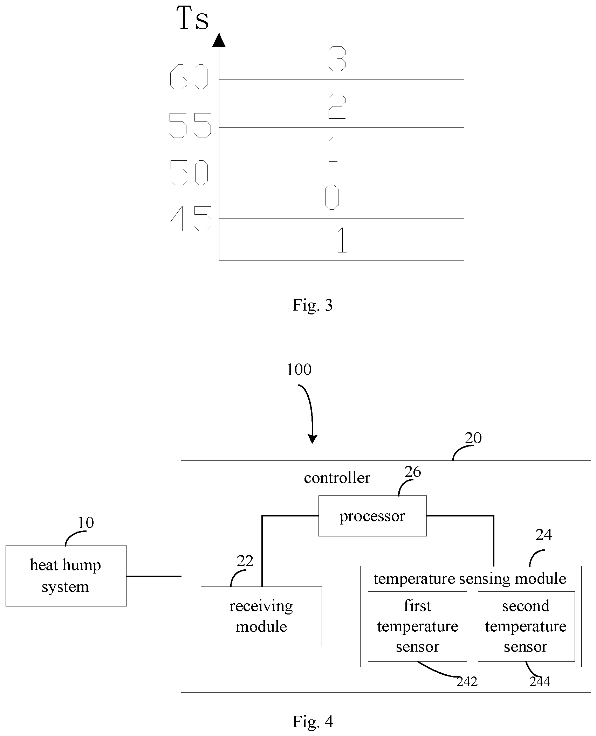

For example, $\Delta T_4$ is determined by searching Fig. 2. In Fig. 2, in a certain temperature range, the corrected temperature $\Delta T_4$ corresponding to the ambient temperature $T_4$ is a certain value, for example, when $7 < T_4 < 18$, $\Delta T_4 = 5$ °C. Generally, with the increase of the ambient temperature $T_4$, the corrected temperature $\Delta T_4$ shows the tendency of increase. Similarly, $\Delta T_s$ is determined according to Fig. 3, in a certain temperature range, the corrected temperature

$\Delta T_s$ corresponding to the set temperature $T_s$ is a certain value, for example, when $55 < T_s < 60$, $\Delta T_s = 2$ °C. Generally, with the increase of the set temperature $T_s$, the corrected temperature $\Delta T_s$ shows the tendency of increase. Examples are taken to illustrate the computing procedure of $\Delta T$.

Example One: when the ambient temperature $T_4$ is 14°C, and the set temperature $T_s$ is 42°C, the corresponding turn-on temperature difference $\Delta T$ may be as follows. According to Fig. 2 and Fig. 3, the corrected temperature $\Delta T_4$ corresponding to $T_4$ is 5°C when the ambient temperature $T_4$ is 14°C, and the corrected temperature $\Delta T_s$ corresponding to $T_s$ is -1°C when the set temperature $T_s$ is 42°C. Then, a value of $\Delta T$ may be as $\Delta T$ =5+ (-1) =5-1=4°C. That is, the turn-on temperature difference $\Delta T$ =4°C when the ambient temperature $T_4$ is 14°C and the set temperature $T_s$ is 42°C.

In an embodiment of the present disclosure, the turn-on threshold $T$ is the difference of the set temperature $T_s$ and the turn-on temperature difference $\Delta T$. That is, $T = T_s - \Delta T = 38$ °C. When it is detected that in the water tank, the current water temperature $T_1 < 38$ °C, the heat pump system is controlled to be turned on to perform heating. In addition, the fixed temperature difference currently adopted is 5°C or 6°C, so that the turn-on may be realized in advance when $\Delta T$ =4°C, thereby ensuring the timeliness and comfort of using water by the user.

Example Two: when the ambient temperature $T_4$ is 14°C, and the set temperature $T_s$ is 60°C, the turn-on temperature difference $\Delta T$ may be as follows.

According to Fig. 2 and Fig. 3, the corrected temperature corresponding to $T_4$ is 5°C when the ambient temperature $T_4$ is 14°C, and the corrected temperature corresponding to $T_s$ is 3°C when the set temperature $T_s$ is 60°C. Then, a value of $\Delta T$ may be as $\Delta T$ =5+3=8 °C. That is, the turn-on temperature difference $\Delta T$ =8°C when the ambient temperature $T_4$ is 14°C and the set temperature $T_s$ is 60°C.

In an embodiment of the present disclosure, the turn-on threshold $T$ is the difference of the set temperature $T_s$ and the turn-on temperature difference $\Delta T$, that is, $T = T_s - \Delta T = 52$ °C. When it is detected that in the water tank, the current water temperature $T_1 < 52$°C, the heat pump system is controlled to be turned on to heat the water in the water tank.

In addition, the fixed temperature difference currently adopted is 5°C or 6°C, so that the delayed turn-on may be realized when $\Delta T$ =8°C, thereby reducing the heat pump system operating under high load and ensuring the reliability.

In another embodiment of the present disclosure, the turn-on temperature difference $\Delta T$ is determined by a formula of

$$\Delta T = f(a, b, c\_\Delta T_4, c\_\Delta T_s) = \left[a \cdot c\_\Delta T_4 + b \cdot c\_\Delta T_s\right],$$

where a is a weight corresponding to the ambient temperature $T_4$, b is a weight corresponding to the set temperature $T_s$, $c\_\Delta T_4$ is the corrected temperature corresponding to the ambient temperature $T_4$, and the higher the ambient temperature $T_4$ is, the greater the corresponding corrected temperature $c\_\Delta T_4$ is. $c\_\Delta T_s$ is the corrected temperature corresponding to the set temperature $T_s$, and the higher the set temperature $T_s$ is, the greater the corresponding corrected temperature $c\_\Delta T_s$ is. [ ] is a rounding operator.

For example, in an embodiment of the present disclosure, a is set to 4, b is set to 4, parameter values of $c\_\Delta T_4$ and $c\_\Delta T_s$ may be shown in the following tables. The value of $c\_\Delta T_4$ may be acquired according to the following rule: when $T_{41} < T_4 < T_{42}$, the value of $c\_\Delta T_4$ is the corrected temperature corresponding to $T_{41}$, in which $T_{41}$ and $T_{42}$ are adjacent ambient temperatures shown in the table, and $T_4$ is the current ambient temperature. For example, when the current ambient temperature $T_4$ = 8 °C, $T_4$ is between $T_{41}$ =6°C and $T_{42}$ =10°C, and thus $c\_\Delta T_4$ = 0.9 °C, that is the corrected temperature $c\_\Delta T_4$ corresponding to $T_{41}$. Similarly, the value of $c\_\Delta T_s$ may be acquired according to the following rule: when $T_{s1} < T_s < T_{s2}$, the value of $c\_\Delta T_s$ is the corrected temperature corresponding to $T_{s1}$, in which $T_{s1}$ and $T_{s2}$ are adjacent set temperatures shown in the table. For example, when the current set temperature $T_s$ = 43 °C, $T_s$ is between $T_{s1}$ =42°C and $T_{s2}$ =44°C, and thus $c\_\Delta T_s$ = -0.2 °C (that is the corrected temperature $c\_\Delta T_s$ corresponding to $T_{s1}$).

| $T_4$ | -10 | -6 | -2 | 2 | 6 | 10 | 14 | 18 | 22 | 26 | 30 | 34 | 38 | 42 | 46 | 50 |
|---|---|---|---|---|---|---|---|---|---|---|---|---|---|---|---|---|
| $c\_\Delta T_4$ | 0.5 | 0.6 | 0.7 | 0.8 | 0.9 | 1.0 | 1.1 | 1.2 | 1.3 | 1.4 | 1.5 | 1.6 | 1.7 | 1.8 | 1.9 | 2.0 |

| $T_s$ | 40 | 42 | 44 | 46 | 48 | 50 | 52 | 54 | 56 | 58 | 60 | 62 | 64 | 66 | 68 | 70 |
|---|---|---|---|---|---|---|---|---|---|---|---|---|---|---|---|---|
| $c\_\Delta Ts$ | -0.3 | -0.2 | -0.1 | 0.0 | 0.1 | 0.2 | 0.3 | 0.4 | 0.5 | 0.6 | 0.7 | 0.8 | 0.9 | 1.0 | 1.1 | 1.2 |

Examples are taken to illustrate the computing procedure of $\Delta T$.

Example One: when the ambient temperature $T_4$ is 14°C, and the set temperature $T_s$ is 42°C, the turn-on

temperature difference $\Delta T$ may be as follows. According to the above table, $c\_\Delta T_4$ corresponding to $T_4$ is 1.1°C when the ambient temperature $T_4$ is 14°C and $c\_\Delta T_s$ corresponding to $T_s$ is -0.2°C when the set temperature $T_s$ is 42°C. Then, the value of $\Delta T$ may be as follows: $\Delta T = [4*1.1+4*(-0.2)] = [3.6] = 3°C$. That is, the turn-on temperature difference $\Delta T = 3°C$ when the ambient temperature $T_4$ is 14°C and the set temperature $T_s$ is 42°C.

In an embodiment of the present disclosure, the turn-on threshold $T$ is the difference of the set temperature $T_s$ and the turn-on temperature difference $\Delta T$. That is, $T = T_s - \Delta T = 39$ °C. When it is detected that in the water tank, the current water temperature $T_1 < 39°C$, the heat pump system is controlled to be turned on to perform heating. In addition, the fixed temperature difference currently adopted is 5°C or 6°C, so that the turn-on may be realized in advance when $\Delta T = 3°C$, thereby ensuring the timeliness and comfort of using water by the user.

Example Two: if the ambient temperature $T_4$ is 14°C, and the set temperature $T_s$ is 60°C, the turn-on temperature difference $\Delta T$ may be as follows. According to the above table, $c\_\Delta T_4$ corresponding to $T_4$ is 1.1°C when the ambient temperature $T_4$ is 14°C and $c\_\Delta T_s$ corresponding to $T_s$ is 0.7°C when the set temperature $T_s$ is 60°C. Then, the value of $\Delta T$ may be as follows: $\Delta T = [4*1.1+4*0.7] = [7.2] = 7°C$. That is, the turn-on temperature difference $\Delta T = 7°C$ when the ambient temperature $T_4$ is 14°C and the set temperature $T_s$ is 60°C.

In an embodiment of the present disclosure, the turn-on threshold $T$ is the difference of the set temperature $T_s$ and the turn-on temperature difference $\Delta T$. That is, $T = T_s - \Delta T = 53$ °C. When it is detected that in the water tank, the current water temperature $T_1 < 53$ °C, the heat pump system is controlled to be turned on to heat the water in the water tank. In addition, the fixed temperature difference currently adopted is 5°C or 6°C, so that the delayed turn-on may be realized when $\Delta T = 7°C$, thereby reducing the heat pump system operating under high load and ensuring the reliability.

In another embodiment of the present disclosure, the turn-on threshold $T$ is a difference between a turn-off temperature $T_{off}$ and the turn-on temperature difference $\Delta T$, and the turn-off temperature $T_{off}$ is a limit temperature reached by the water heated by the heat pump system. That is, $T = T_{off} - \Delta T$. This reduces the load on the heat pump system, and ensures the reliability of the heat pump system.

In still another embodiment of the present disclosure, the turn-on threshold $T$ is a minimum of a difference between the set temperature $T_s$ and the turn-on temperature difference $\Delta T$ and a difference between a turn-off temperature $T_{off}$ and the turn-on temperature difference $\Delta T$. That is, $T = \min(T_s - \Delta T, T_{off} - \Delta T)$. Similarly, this reduces the load on the heat pump system, and ensures the reliability of the heat pump system.

With the method for controlling a heat pump water heater according to embodiments of the present disclosure, the turn-on temperature difference is acquired according to the ambient temperature and the set temperature, and the turn-on threshold is determined intelligently according to the turn-on temperature difference, thereby improving comfort of using the water by the user, improving the user experience and ensuring the reliability of the heat pump system.

The system 100 according to embodiments of the second aspect, as shown in Fig. 4, includes a heat pump system 10 and a controller 20. The controller 20 includes a receiving module 22, a temperature sensing module 24 and a processor 26.

The receiving module 22 is configured to receive a turn-on instruction. The temperature sensing module 24 includes a first temperature sensor 242 and a second temperature sensor 244. The first temperature sensor 242 is configured to detect a current water temperature in a water tank of the heat pump water heater. The second temperature sensor 244 is configured to detect an ambient temperature. The processor 26 is configured to acquire a turn-on temperature difference according to the ambient temperature and a set temperature of the heat pump water heater, and to acquire a turn-on threshold according to the turn-on temperature difference. The processor 26 is further configured to determine whether the current water temperature is less than the turn-on threshold, to keep a current state if the current water temperature is greater than or equal to the turn-on threshold, and to control the heat pump system 10 to turn on and to heat the water in the water tank if the current water temperature is less than the turn-on threshold.

With the system for controlling a heat pump water heater according to embodiments of the present disclosure, the processor acquires the turn-on temperature difference according to the ambient temperature and set temperature acquired by the temperature sensing module, and determines intelligently the turn-on threshold according to the turn-on temperature difference, thereby improving comfort of using the water by the user, improving the user experience and ensuring the reliability of the heat pump system.

It should be noted that, specific implementation manners of the system for controlling a heat pump water heater according to embodiments of the present disclosure may be similar to these of the method, and reference may be made to the description of the method, which is not repeated herein in order to reduce redundancy.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

## Claims

**1.** A method for controlling a heat pump water heater, the heat pump water heater having a heat pump system, and the method comprising:

receiving a turn-on instruction for turning on the heat pump system of the heat pump water heater (S1);
detecting an ambient temperature and a current water temperature in a water tank of the heat pump water heater (S2);
acquiring a turn-on threshold according to a turn-on temperature difference (S3);
determining whether the current water temperature is less than the turn-on threshold (S4);
keeping a current state of the heat pump system if the current water temperature is greater than or equal to the turn-on threshold (S5); and
controlling the heat pump system to turn on and to heat the water in the water tank if the current water temperature is less than the turn-on threshold (S6),
**characterised by** acquiring the turn-on temperature difference according to the ambient temperature and a set temperature of the heat pump water heater.

**2.** The method according to claim 1, wherein the turn-on temperature difference is acquired according to a corrected temperature corresponding to the ambient temperature and a corrected temperature corresponding to the set temperature, in which the higher the ambient temperature is, the greater the corrected temperature corresponding to the ambient temperature is; and the higher the set temperature is, the greater the corrected temperature corresponding to the set temperature is.

**3.** The method according to claim 1 or 2, wherein the turn-on threshold is a difference between the set temperature and the turn-on temperature difference.

**4.** The method according to claim 1 or 2, wherein the turn-on threshold is a difference between a turn-off temperature and the turn-on temperature difference, and the turn-off temperature is a limit temperature reached by the water heated by the heat pump system.

**5.** The method according to claim 1 or 2, wherein the turn-on threshold is a minimum of a difference between the set temperature and the turn-on temperature difference and a difference between a turn-off temperature and the turn-on temperature difference, and the turn-off temperature is a limit temperature reached by the water heated by the heat pump system.

**6.** A system (100) for controlling a heat pump water heater, comprising:

a heat pump system (10);
a controller (20), comprising:

a receiving module (22), configured to receive a turn-on instruction for turning on the heat pump system (10);
a temperature sensing module (24), configured to detect an ambient temperature and a current water temperature in the heat pump water heater; and
a processor (26), configured to acquire a turn-on threshold according to a turn-on temperature difference, wherein
the processor (26) is further configured to determine whether the current water temperature is less than the turn-on threshold, to keep a current state of the heat pump system (10) if the current water temperature is greater than or equal to the turn-on threshold, and to control the heat pump system (10) to turn on and to heat water in the heat pump water heater if the current water temperature is less than the turn-on threshold, and
**characterised in that** the processor is further configured to acquire the turn-on temperature difference according to the ambient temperature and a set temperature of the heat pump water heater.

7. The system (100) according to claim 6, wherein the processor (26) is further configured to acquire the turn-on temperature difference according to a corrected temperature corresponding to the ambient temperature and a corrected temperature corresponding to the set temperature, wherein the higher the ambient temperature is, the greater the corrected temperature corresponding to the ambient temperature is; and the higher the set temperature is, the greater the corrected temperature corresponding to the set temperature is.

8. The system (100) according to claim 6 or 7, wherein the temperature sensing module (24) comprises:

a first temperature sensor (242), configured to detect the current water temperature in a water tank of the heat pump water heater; and
a second temperature sensor (246), configured to detect the ambient temperature.

9. The system according to any one of claims 6 to 8, wherein the turn-on threshold is a difference between the set temperature and the turn-on temperature difference.

10. The system according to any one of claims 6 to 8, wherein the turn-on threshold is a difference between a turn-off temperature and the turn-on temperature difference, and the turn-off temperature is a limit temperature reached by the water heated by the heat pump system (10).

11. The system according to any one of claims 6 to 8, wherein the turn-on threshold is a minimum of a difference between the set temperature and the turn-on temperature difference and a difference between a turn-off temperature and the turn-on temperature difference, and the turn-off temperature is a limit temperature reached by the water heated by the heat pump system (10).

**Patentansprüche**

1. Verfahren zum Steuern einer Warmwasserwärmepumpe, wobei die Warmwasserwärmepumpe ein Wärmepumpensystem aufweist und das Verfahren umfasst:

Empfangen eines Einschaltbefehls zum Einschalten des Wärmepumpensystems der Warmwasserwärmepumpe (S1);
Ermitteln einer Umgebungstemperatur und einer aktuellen Wassertemperatur in einem Wassertank der Warmwasserwärmepumpe (S2);
Erfassen eines Einschaltschwellenwertes entsprechend einer Einschalttemperaturdifferenz (S3);
Bestimmen, ob die aktuelle Wassertemperatur niedriger als der Einschaltschwellenwert (S4) ist;
Halten eines aktuellen Zustands des Wärmepumpensystems, wenn die aktuelle Wassertemperatur größer oder gleich dem Einschaltschwellenwert ist (S5); und
Ansteuern des Wärmepumpensystems zum Einschalten und zum Erwärmen des Wassers in dem Wassertank, wenn die aktuelle Wassertemperatur niedriger als der Einschaltschwellenwert ist (S6),
**gekennzeichnet durch** das Erfassen der Einschalttemperaturdifferenz entsprechend der Umgebungstemperatur und einer Solltemperatur der Warmwasserwärmepumpe.

2. Verfahren nach Anspruch 1, wobei die Einschalttemperaturdifferenz gemäß einer korrigierten Temperatur entsprechend der Umgebungstemperatur und einer korrigierten Temperatur entsprechend der Solltemperatur erfasst wird, wobei je höher die Umgebungstemperatur ist, desto höher die korrigierte Temperatur entsprechend der Umgebungstemperatur ist; und je höher die Solltemperatur ist, desto größer die korrigierte Temperatur entsprechend der Solltemperatur ist.

3. Verfahren nach Anspruch 1 oder 2, wobei der Einschaltschwellenwert eine Differenz zwischen der Solltemperatur und der Einschalttemperaturdifferenz ist.

4. Verfahren nach Anspruch 1 oder 2, wobei der Einschaltschwellenwert eine Differenz zwischen einer Abschalttemperatur und der Einschalttemperaturdifferenz ist, und die Abschalttemperatur eine Grenztemperatur ist, die von dem Wasser erreicht wird, das von dem Wärmepumpensystem erwärmt wird.

5. Verfahren nach Anspruch 1 oder 2, wobei der Einschaltschwellenwert ein Mindestwert einer Differenz zwischen der Solltemperatur und der Einschalttemperaturdifferenz und einer Differenz zwischen einer Abschalttemperatur und der Einschalttemperaturdifferenz ist, und die Abschalttemperatur ein Grenztemperatur ist, die von dem Wasser erreicht wird, das von dem Wärmepumpensystem erwärmt wird.

6.  System (100) zum Steuern einer Warmwasserwärmepumpe, umfassend:

    ein Wärmepumpensystem (10);
    eine Steuerung (20), umfassend:

       ein Empfangsmodul (22), das dazu konfiguriert ist, einen Einschaltbefehl zum Einschalten des Wärmepumpensystems (10) zu empfangen;
       ein Temperatursensormodul (24), das dazu konfiguriert ist, eine Umgebungstemperatur und eine aktuelle Wassertemperatur in der Warmwasserwärmepumpe zu ermitteln; und
       einen Prozessor (26), der dazu konfiguriert ist, einen Einschaltschwellenwert entsprechend einer Einschalttemperaturdifferenz zu erfassen, wobei
       der Prozessor (26) des Weiteren dazu konfiguriert ist ist, zu bestimmen, ob die aktuelle Wassertemperatur niedriger als der Einschaltschwellenwert ist, einen aktuellen Zustand des Wärmepumpensystems (10) zu halten, wenn die aktuelle Wassertemperatur größer oder gleich dem Einschaltschwellenwert ist, und das Wärmepumpensystem (10) zum Einschalten und zum Erwärmen von Wasser in der Warmwasserwärmepumpe zu steuern, wenn die aktuelle Wassertemperatur niedriger als der Einschaltschwellenwert ist, und **dadurch gekennzeichnet dass** der Prozessor des Weiteren dazu konfiguriert ist, die Einschalttemperaturdifferenz gemäß der Umgebungstemperatur und einer Solltemperatur der Warmwasserwärmepumpe zu erfassen.

7.  System (100) nach Anspruch 6, wobei der Prozessor (46) des Weiteren dazu konfiguriert ist, die Einschalttemperaturdifferenz gemäß einer korrigierten Temperatur entsprechend der Umgebungstemperatur und einer korrigierten Temperatur entsprechend der Solltemperatur zu erfassen, wobei je höher die Umgebungstemperatur ist, desto höher die korrigierte Temperatur entsprechend der Umgebungstemperatur ist; und je höher die Solltemperatur ist, desto höher die korrigierte Temperatur entsprechend der Solltemperatur ist.

8.  System (100) nach Anspruch 6 oder 7, wobei das Temperatursensormodul (24) umfasst:

    einen ersten Temperatursensor (242), der dazu ausgelegt ist, die aktuelle Wassertemperatur in einem Wassertank der Warmwasserwärmepumpe zu ermitteln; und
    einen zweiten Temperatursensor (246), der dazu ausgelegt ist, die Umgebungstemperatur zu ermitteln.

9.  System nach einem der Ansprüche 6 bis 8, wobei der Einschaltschwellenwert eine Differenz zwischen der Solltemperatur und der Einschalttemperaturdifferenz ist.

10. System nach einem der Ansprüche 6 bis 8, wobei der Einschaltschwellenwert eine Differenz zwischen einer Abschalttemperatur und der Einschalttemperaturdifferenz ist, und die Abschalttemperatur ein Grenztemperatur ist, die von dem Wasser erreicht wird, das von dem Wärmepumpensystem (10) erwärmt wird.

11. System nach einem der Ansprüche 6 bis 8, wobei der Einschaltschwellenwert ein Mindestwert einer Differenz zwischen der Solltemperatur und der Einschalttemperaturdifferenz und einer Differenz zwischen einer Abschalttemperatur und der Einschalttemperaturdifferenz ist, und die Abschalttemperatur ein Grenztemperatur ist, die von dem Wasser erreicht wird, das von dem Wärmepumpensystem (10) erwärmt wird.

## Revendications

1.  Procédé de commande d'un chauffe-eau utilisant une pompe à chaleur, le chauffe-eau utilisant une pompe à chaleur ayant un système de pompe à chaleur, et le procédé comprenant :

    la réception d'une instruction de mise en marche pour mettre en marche le système de pompe à chaleur du chauffe-eau utilisant une pompe à chaleur (S1);
    la détection d'une température ambiante et d'une température d'eau actuelle dans un réservoir d'eau du chauffe-eau utilisant une pompe à chaleur (S2);
    l'acquisition d'un seuil de mise en marche en fonction d'une différence de température de mise en marche (S3);

déterminer si la température actuelle de l'eau est inférieure au seuil d'activation (S4);

maintenir un état actuel du système de pompe à chaleur si la température actuelle de l'eau est supérieure ou égale au seuil de démarrage (S5); et

la commande du système de pompe à chaleur pour mettre en marche et pour chauffer l'eau du réservoir si la température actuelle de l'eau est inférieure au seuil de mise en marche (S6),

**caractérisé par** l'acquisition de la différence de température de mise en marche en fonction de la température ambiante et d'une température de consigne du chauffe-eau de la pompe à chaleur.

2. Procédé selon la revendication 1, dans lequel la différence de température de chauffage est acquise selon une température corrigée correspondant à la température ambiante et une température corrigée correspondant à la température de consigne, dans lequel plus la température ambiante est élevée, plus la température corrigée correspondant à la température ambiante est grande; et plus la température de consigne est élevée, plus la température corrigée correspondant à la température de consigne est grande.

3. Procédé selon les revendications 1 ou 2, dans lequel le seuil de mise en marche est une différence entre la température de consigne et la différence de température de mise en marche.

4. Procédé selon les revendications 1 ou 2, dans lequel le seuil de mise en marche est une différence entre une température de coupure et la différence de température de mise en marche, et la température de coupure est une température limite atteinte par l'eau chauffée par le système de pompe à chaleur.

5. Procédé selon les revendications 1 ou 2, dans lequel le seuil de mise en marche est au minimum une différence entre la température de consigne et la différence de température de mise en marche et une différence entre une température d'arrêt et la différence de température de mise en marche, et la température d'arrêt est une température limite atteinte par l'eau chauffée par le système de pompe à chaleur.

6. Système (100) de commande d'un chauffe-eau utilisant une pompe à chaleur, comprenant:

un système de pompe à chaleur (10);

un dispositif de commande (20), comprenant:

un module de réception (22), configuré pour recevoir une instruction de mise en marche du système de pompe à chaleur (10);

un module de détection de température (24), configuré pour détecter une température ambiante et une température d'eau actuelle dans le chauffe-eau de la pompe à chaleur; et

un processeur (26), configuré pour acquérir un seuil de mise en marche en fonction d'une différence de température de mise en marche, dans lequel

le processeur (26) est en outre configuré pour déterminer si la température actuelle de l'eau est inférieure au seuil de mise en marche, pour maintenir un état actuel du système de pompe à chaleur (10) si la température actuelle de l'eau est supérieure ou égale au seuil de mise en marche, et pour commander le système de pompe à chaleur (10) afin qu'il se mette en marche et chauffe l'eau du chauffe-eau de la pompe à chaleur si la température actuelle de l'eau est inférieure au seuil de mise en marche, et

**caractérisé en ce que** le processeur est en outre configuré pour acquérir la différence de température de mise en marche en fonction de la température ambiante et d'une température de consigne du chauffe-eau de la pompe à chaleur.

7. Système (100) selon la revendication 6, dans lequel le processeur (26) est en outre configuré pour acquérir la différence de température de mise en marche de la pompe à chaleur selon une température corrigée correspondant à la température ambiante et une température corrigée correspondant à la température de consigne, dans lequel plus la température ambiante est élevée, plus la température corrigée correspondant à la température ambiante est élevée; et plus la température de consigne est élevée, plus la température corrigée correspondant à la température de consigne est élevée.

8. Système (100) selon les revendications 6 ou 7, dans lequel le module de détection de la température (24) comprend:

un premier capteur de température (242), configuré pour détecter la température actuelle de l'eau dans un réservoir d'eau du chauffe-eau de la pompe à chaleur; et

un second capteur de température (246), configuré pour détecter la température ambiante.

9. Système selon l'une quelconque des revendications 6 à 8, dans lequel le seuil de mise en marche est une différence entre la température réglée et la différence de température de mise en marche.

10. Système selon l'une quelconque des revendications 6 à 8, dans lequel le seuil d'activation est une différence entre une température de désactivation et la différence de température d'activation, et la température de désactivation est une température limite atteinte par l'eau chauffée par le système de pompe à chaleur (10).

11. Système selon l'une quelconque des revendications 6 à 8, dans lequel le seuil de mise en marche est au minimum une différence entre la température de consigne et la différence de température de mise en marche et une différence entre une température d'arrêt et la différence de température de mise en marche, et la température d'arrêt est une température limite atteinte par l'eau chauffée par le système de pompe à chaleur (10).

Fig. 1

Fig. 2

Ts

60 ——————————————— 3

55 ——————————————— 2

50 ——————————————— 1

45 ——————————————— 0

——————————————— -1

Fig. 3

100

20

controller

26

processor

10

heat hump system

22

receiving module

24

temperature sensing module

first temperature sensor

second temperature sensor

242        244

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100209084 A1
- EP 2559953 A1

- CN 200965352 Y